(19) **Europäisches Patentamt**

**European Patent Office**

**Office européen des brevets**

(11) **EP 0 889 003 A1**

(12) **EUROPÄISCHE PATENTANMELDUNG**

(43) Veröffentlichungstag:
07.01.1999 Patentblatt 1999/01

(21) Anmeldenummer: 98111802.9

(22) Anmeldetag: 26.06.1998

(51) Int. Cl.⁶: **C01B 33/40**, C11D 3/12,
B01J 21/16, B01J 23/00,
B01J 20/12, C09D 7/12

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 01.07.1997 DE 19727894

(71) Anmelder: Clariant GmbH
65929 Frankfurt am Main (DE)

(72) Erfinder:
• Bauer, Harald, Dr.
50170 Kerpen (DE)
• Schimmel, Günther, Dr.
50374 Erftstadt (DE)
• Thewes, Volker
40789 Monheim (DE)

(54) **Synthetisches Magnesiumsilikat**

(57) Die Erfindung betrifft ein synthetisches Magnesiumsilikat mit schichtförmiger Kristallstruktur, ein Verfahren zu seiner Herstellung und seine Verwendung.

EP 0 889 003 A1

**Beschreibung**

Die Erfindung betrifft ein synthetisches Magnesiumsilikat mit schichtförmiger Kristallstruktur, ein Verfahren zu seiner Herstellung und seine Verwendung.

Synthetische Hectorite stellen trioktraedrische Schichtsilikate des Smectit-Typs der allgemeinen Formel

$$[Mg_{6-x}Li_xSi_8O_{20}(OH)_{4-y}F_y]^{x(-)} \, {}^x/_z M^{z(+)}$$

in der $0 < x < 1,2$ sowie $0 < y < 4$ ist und M ein Kation mit der Wertigkeit z (z ist 1, 2 oder 3) bedeutet, dar. Sie werden aufgrund ihrer rheologischen Eigenschaften vielfach in Verdickersysteme eingesetzt (Thixotropierungsmittel). Für die Herstellung der synthetischen Hectorite sind eine Reihe von Verfahren bekannt.

Die DE-A-11 84 742 beschreibt ein Verfahren zur Herstellung eines synthetischen Minerals vom Hectorit-Typ mit verbesserten rheologischen Eigenschaften, wobei eine Magnesiumionen enthaltende Lösung und eine alkalische Natriumsilikat-Lösung in eine dritte Lösung, die Lithium und Fluoridionen enthält, eingebracht werden und dann das Reaktionsgemisch unter Bewegung erhitzt wird, bis eine Probe des Produktes hieraus nach Filtration, Waschen und Trocknen bei 110 °C in 5 gew.%iger Dispersion in Wasser ein Gel bildet. Das Produkt wird aufgearbeitet und auf 110 bis 450 °C erhitzt, um brauchbare wäßrige Gelierungseigenschaften zu entwickeln.

Die DE-A-15 67 503 beschreibt ein analoges Verfahren, jedoch wird das Produkt vor der Hitzebehandlung bei 110 bis 450 °C in wäßriger Lösung mit einem Aminsalz umgesetzt. Nach beiden Verfahren erhält man Produkte, die in der Lage sind, organische Addukte zu bilden.

Beide Verfahren weisen jedoch den Nachteil auf, daß erheblich lange Reaktionszeiten notwendig sind und außerdem eine genaue Kontrolle der Qualität des Endproduktes sehr umständlich ist.

Die britische Patentschrift GB-B-1 432 770 beschreibt ein Verfahren zur Herstellung eines wasserhaltigen Magnesiumsilikats mit einer dem Hectorit ähnlichen Kristallstruktur, bei dem zunächst ein Magnesiumsalz mit einer Natriumcarbonatlösung zu Magnesiumcarbonat umgesetzt wird und dann eine Natriumsilikatlösung hinzugegeben wird, so daß Siliciumdioxid ausfällt. Die erhaltenen Suspensionen werden danach eine Stunde bei Atmosphärendruck gekocht und dann für 3 bis 6 Stunden bei 207 °C hydrothermal behandelt.

Nach diesen Verfahren erhält man fluoridfreie Produkte, deren optische Dichte und deren Bingham-Fließwerte (2 %ige Dispersion in Leitungswasser mit 140 mg $CaCO_3$/l) gemessen werden.

Ein weiteres Verfahren zur Herstellung fluoridfreier wasserhaltiger Magnesiumsilikate ist in der DE-C 23 56 865 beschrieben. Danach wird eine wasserlösliche Magnesiumverbindung in einem wäßrigen Medium gelöst und zu dem wäßrigen Medium zur Ausfällung einer wasserunlöslichen Magnesiumverbindung eine wäßrige alkalische Lösung von einer oder mehreren Natriumverbindungen zugegeben und danach eine Siliciumdioxidausfällung in der die wasserunlösliche Magnesiumverbindung enthaltenden wäßrigen Suspension bewirkt. Nach diesem Verfahren werden die Magnesiumverbindung und das Siliciumdioxid gemeinsam ausgefällt.

In der PCT/WO 93/11069 ist ein Verfahren zur Herstellung eines synthetischen Hectorits beschrieben, in dem unter basischen Bedingungen eine Vorstufe in fester Form hergestellt wird, die bereits die Mg/Si-Verhältnisse des späteren Hectorits aufweist. Die Herstellung dieser Vorstufe erfolgt in einem engem pH-Bereich zwischen 7,5 und 9 oder zwischen 9,7 und 10. Die Vorstufe wird dann auf hydrothermalem Wege zum eigentlichen Hectorit-Produkt kristallisiert. Durch die genaue pH-Kontrolle und Einhaltung konstanter Werte soll ein in seinen Eigenschaften verbessertes Produkt erhalten werden.

Nach der US-A-3,586,478 erhält man ein synthetisches Schichtsilikat des Hektorit-Typs, in dem eine wäßrige Mischung aus einem wasserlöslichem Magnesiumsalz, Natriumsilikat, Natriumcarbonat oder Natronlauge und einer Li- und F-Ionen enthaltenden Lösung hergestellt wird, diese bei Siedetemperatur und Atmosphärendruck 10 bis 20 Stunden hydrothermal behandelt wird, so daß das Produkt auskristallisiert. Nach Waschen und Trocknen erhält man ein Produkt, in dem die Kationen und Anionen in bestimmten Mengenverhältnissen zueinander stehen.

Die DE-A-16 67 502 beschreibt ein Verfahren zur Herstellung eines F-freien synthetischen Tonminerals, bei dem in eine erste wäßrige Lösung, die Magnesium- und Lithium-Ionen enthält, eine zweite Lösung, die Natriumcarbonat und Natriumsilikat enthält, gegeben wird, wobei ein weißer Niederschlag gebildet wird. Das entstandene Gemisch wird anschließend erhitzt und unter Druck nach längerer Zeit ein Produkt auskristallisiert, welches gewaschen und getrocknet wird.

Nach dem Verfahren der GB-A-1 054 111 wird ein synthetisches Tonmineral hergestellt, indem eine wäßrige Lösung, die Lithium- und Magnesium-Ionen enthält, zum Siedepunkt erhitzt wird und in diese langsam eine Natriumsilikat-Lösung gegeben wird. Anschließend wird hierzu eine wäßrige Natriumcarbonat-Lösung gegeben. Nach hydrothermaler Behandlung wird das Produkt filtriert, gewaschen, getrocknet und gemahlen.

Die EP-A-0 088 372 beschreibt ein Verfahren zur Herstellung eines synthetischen Hectorits, bei dem man eine wäßrige Lösung eines Magnesiumsalzes auf 110 bis 373 °C aufheizt, Lithium- und/oder Fluoridionen zugibt und anschließend eine Natrium- und Silicium-Quelle zusetzt.

Die DE-A-27 18 576 beschreibt eine sehr spezielles Verfahren zur Herstellung eines Materials, das einen fluorhaltigen trioktraedrischen Ton des Smektit-Typs erthält, bei dem unter anderem ein Siliciumdioxid-Sol zugesetzt wird. Die Bingham-Fließgrenzen der erhaltenen Produkte sind nur für wenige Anwendungsbereiche sinnvoll.

Die US-A-4,049,780 beschreibt ebenfalls ein komplexes Verfahren zur Herstellung von synthetischen Silikaten, bei dem ebenfalls Produkte erhalten werden, die für viele praktische Anwendungen nicht ausreichende Bingham-Fließgrenzen aufweisen.

Die vorgenannten Verfahren weisen vielfach den Nachteil auf, daß die Raum-Zeit-Ausbeuten gering sind und die Produkteigenschaften oft nur schwer gleichmäßig reproduzierbar sind. Viele Verfahren erscheinen außerdem sehr zeitaufwendig und ökonomisch ungünstig. Die erhaltenen Produkte und ihre Eigenschaften schwanken teilweise sehr stark in ihrer Zusammensetzung und ihrer Qualität. Darüberhinaus gelingt es oft nicht, die Produkte aufbestimmte Werte bezüglich der Fließgrenzen in den entsprechenden Elektrolytlösungen oder aufeine hohe Faseraffinität einzustellen.

Der Erfindung liegt daher die Aufgabe zugrunde, ein synthetisches Silikat zur Verfügung zu stellen, das reproduzierbare, genau definierte Eigenschaften aufweist und insbesondere in wäßrigen Lösungen mit geringem Elektrolytgehalt bzw. in wäßrigen Lösungen mit hohem Elektrolytgehalt eine Strukturviskosität erzeugt. Zudem soll das Produkt eine hohe Affinität zu Textilfasern aufweisen.

Diese Aufgabe wird gelöst durch ein synthetisches Magnesiumsilikat mit schichtförmiger Kristallstruktur der allgemeinen Formel

$$[Mg_{3-x}Li_xSi_4O_{10}(OH)_{2-y}F_y]^{x-} \; {}^x/_zM^{z+}$$

mit $01 \leq x \leq 0,4$ und $0 < y \leq 2$, M ist ein Alkalimetallion mit der Wertigkeit z und in dem der Fluorgehalt $[c_F]$ zum Siliciumgehalt $[c_{Si}]$ im Verhältnis

$$c_F[mol] = -1,92 \; c_{Si}[mol] + b \text{ mit } b = 2,18 \text{ bis } 2,02$$

steht.

Bevorzugt ist $0,21 \leq x \leq 0,33$ ist.

Besonders bevorzugt ist $0,21 \leq x \leq 0,28$ ist.

Bevorzugt erzeugt das erfindungsmäßige synthetische Magnesiumsilikat mit schichtförmiger Kristallstruktur in wäßrigen Lösungen mit geringem Elektrolytgehalt eine hohe Strukturviskosität.

Bevorzugt erzeugt das erfindungsmäßige synthetische Magnesiumsilikat mit schichtförmiger Kristallstruktur in wäßrigen Lösungen mit hohem Elektrolytgehalt eine sehr hohe Strukturviskosität.

Bevorzugt zeigt das erfindungsmäßige synthetische Magnesiumsilikat mit schichtförmiger Kristallstruktur eine hohe Affinität zu Textilfasern.

Die Erfindung betrifft ebenfalls ein Verfahren zur Herstellung von synthetischen Magnesiumsilikaten mit schichtförmiger Kristallstruktur nach der vorgenannten Formel, bei dem man eine wäßrige MgSO₄-Lösung mit einer wäßrigen Lösung, die Lithium- und Fluorid-Ionen enthält, umsetzt, und anschließend eine Silicium-Verbindung hinzufügt.

Bevorzugt wird das erfindungsgemäße Verfahren so ausgeführt, daß man nach Zugabe der Silicium-Verbindung die Reaktionsmischung erhitzt und für 2 bis 24 Stunden auf dieser Temperatur hält, danach abkühlt, das Magnesiumsilikat von den Nebenprodukten abtrennt, anschließend wäscht und aufarbeitet.

Bevorzugt erhitzt man auf 100 bis 320 °C.

Besonders bevorzugt erhitzt man für 3 bis 8 Stunden auf 170 bis 220 °C.

Beim erfindungsgemäßen Verfahren liegen in der Reaktionsmischung die Molverhältnisse

Mg/Si = 0,7144 bis 0,6405
Li/Si = 0,02464 bis 0,09854
F/Si = 0,4009 bis 0,4899
Na/Si = 0,9514 bis 2,0298
H₂O/Si = 13,9947 bis 42,7536

vor.

Bevorzugt beträgt das Molverhältnis Mg/Si = 0,6873 bis 0,6578 und das Molverhältnis Li/Si = 0,05173 bis 0,0813.

Besonders bevorzugt beträgt das Molverhältnis Mg/Si = 0,6873 bis 0,6701 und das Molverhältnis Li/Si = 0,05173 bis 0,0898.

Bevorzugt wird das nach den vorhergehenden Verfahrensschritten erhaltene Magnesiumsilikat anschließend aufgemahlen.

Die Erfindung betrifft auch die Verwendung von synthetischen Schichtsilikaten des Hektorit-Typs, erhalten nach dem vorstehend beschriebenen Verfahren, zur Herstellung von oder zur Verwendung als Rheologie-Additiv, zur Klärung und Reinigung von Getränken, als Katalysator oder Katalysatorträger, Adsorptionsmittel, Bindemittel und/oder Füllstoff, (Lösungs-)Additiv für Pflanzenschutzformulierungen, Dispergator, Builder, Wäschweichmacher, Trägersubstanz für andere Stoffe und als Additiv.

Als Silikatquelle können Natriumsilikate in fester (Festwassergläser) oder in gelöster Form (Wassergläser) eingesetzt werden. Bevorzugt sind solche mit einem $Na_2O : SiO_2$-Verhältnis von 1 : 2 (Natriumdisilikat, etwa Typ 3Na der Fa. Societe Francaise Hoechst) oder 1 : 3,5 (Natronwasserglas, etwa Typ 4/1 der Fa. Societe Francaise Hoechst).

Als Alkalien werden bevorzugt Natriumhydroxid und Natriumcarbonat in variablen Verhältnissen eingesetzt. Durch Verwendung von Silikaten mit entsprechenden $Na_2O : SiO_2$-Verhältnissen kann ein zusätzlicher Alkalizusatz auch vermieden werden.

Als Magnesiumsalze wird bevorzugt Magnesiumsulfat verwendet. Geeignet sind ebenfalls Magnesiumhydroxidcarbonat, Magnesiumfluorid und andere oder Mischungen der vorgenannten Salze.

Als Lithiumsalz wird Lithiumcarbonat bevorzugt. Geeignet sind auch Lithiumsulfat, Lithiumhydroxid und andere oder Mischungen hieraus.

Als Fluoridquelle wird Flußsäure bevorzugt. Geeignet sind ebenfalls Alkali- und Erdalkalifluoride oder Mischungen hieraus. Die Erdalkalifluoride können auch in situ durch Umsetzung von Erdalkalioxiden, -hydroxiden, -carbonaten und/oder -hydroxycarbonaten mit Flußsäure hergestellt werden.

Das erfindungsgemäße Verfahren kann technisch auf verschiedene Alt und Weise ausgeführt werden. So wird bei ansatzweiser Herstellung eine gesättigte Magnesiumsulfatlösung mit einer Lösung, die die Lithium- und Fluoridquelle darstellt, versetzt. Dann wird eine alkalische Natriumsilikatlösung zugesetzt.

Die Zugabe der alkalischen Natriumsilikatlösung kann in einem breiten Temperaturbereich von 0 bis 300 °C erfolgen. Bevorzugt sind Temperaturen im Bereich von 20 bis 50 °C sowie Zimmertemperatur. Die entstandene Reaktionsmischung (nachfolgend auch mit Suspension bezeichnet) wird unter dem eigenen Dampfdruck der Lösung auf Temperaturen zwischen 70 und 300 °C erhitzt und für eine Zeit von 0,5 bis 20 Stunden bei der entsprechenden Temperatur belassen. Bevorzugt arbeitet man so, daß man die gesamte Suspension für 4 bis 10 Stunden auf 170 bis 230 °C erhitzt.

Danach wird die gesamte Suspension aufunter 100 °C abgekühlt. Dies kann durch direkte Kühlung erfolgen, aber auch durch indirekte Kühlung, etwa mittels Reaktormantelkühlung oder durch Entspannung der Suspension in einem weiteren Behälter.

Bei einem kontinuierlichen Verfahren können die Lösungen auch fortlaufend in einen Hochdruckbehälter eindosiert werden. Die mittlere Verweildauer sollte drei bis sechs Stunden betragen. Dabei wird gleichzeitig die entsprechende Menge an Reaktionsmischung aus dem Reaktor ausgeschleust.

Die so erhaltene Suspension enthält als unlösliche Komponente synthetisches Magnesiumsilikat sowie als Nebenprodukte gelöstes Natriumsulfat und die zur pH-Regulierung eingesetzten Carbonate und Hydroxide, und geringe Mengen der übrigen eingesetzten Ionen. Die Natriumsulfatmenge varriert entsprechend der Magnesiumsulfat-Einsatzmenge und kann gegebenenfalls durch Einsatz von Magnesiumhydroxid oder Magnesiumfluorid verringert werden.

Das erfindungsgemäße Verfahren erlaubt es, mit wesentlichen geringeren $H_2O/SiO_2$-Verhältnissen (erfindungsgemäß etwa 14 : 1 bis 43 : 1) als nach den Verfahren des Standes der Technik, die ein $H_2O/SiO_2$-Verhältnis von 53 : 1 bis über 155 : 1 benötigen, zu arbeiten, so daß nunmehr ein besonders wirtschaftliches Verfahren zur Verfügung steht.

Für bestimmte Anwendungen, etwa in Waschmitteln, kann die anfallende Suspension nach der Trocknung ohne weitere Reinigung eingestezt werden. Für andere Anwendungen, beispielsweise in Lacken, muß das Endprodukt dagegen äußerst rein sein. Die verschiedenen Reinigungsverfahren und ihre Effizienz werden weiter unten beschrieben.

Die nach dem Verfahren gemäß der Erfindung angefallene Suspension, die die vorgenannten Bestandteile noch enthält, kann dementsprechend nachgereinigt werden. Dabei läßt sich das Löslichkeitsverhalten des in der Suspension gebildeten Natriumsulfats zu seiner Abtrennung nutzen. Unter den Konzentrationsverhältnissen des beanspruchten Verfahrens kann ein Großteil des Natriumsulfats durch gezielte Kristallisation und Abdekantieren der abgereicherten Suspension entfernt werden.

Die weitere Reinigung der danach erhaltenen Suspension kann durch Filtration erfolgen, etwa in einem Vakuumtrommelfilter, einer Filterpresse oder einem Bandfilter. Durch eine Filtration nach dem Querstromprinzip, welches den Aufbau eines Filterkuchens durch Erzeugung einer hohen Strömungsgeschwindigkeit vermeidet, werden besonders elektrolytarme Produkte erhalten.

Die Auswaschung der vorliegenden Suspension kann auch durch Zentrifugieren erfolgen, wobei ebenfalls ausreichend elektrolytarme Produkte erhalten werden, allerdings nicht so elektrolytarm wie nach der Querstromfiltration. Die Suspension wird dazu durch mehrfaches Zentrifugieren, Dekantieren der überstehenden Lösung und Wiederaufschlämmen der schwereren Phase mit Wasser gewaschen. Dieser Vorgang wird so oft wiederholt, bis die Leitfähigkeit der Suspension unter einem vorgegebenen Wert liegt. In größerem Maßstab wird das Zielprodukt kontinuierlich mit Wasser gewaschen.

Die Trocknung kann beispielsweise in einem Vakuumtrockenschrank oder mit einem Bandtrockner erfolgen. Vorteilhaft ist eine Verfahrensführung, bei dem zunächst eine Trocknung aufeinem Bandtrockner bis zur Agglomeration (Wassergehalt etwa 80 - 85%) erfolgt und danach auf einem weiteren Bandtrockner konvektiv, also mit durchlüftetem Schüttgut bei ca. 130 °C getrocknet wird.

Für größere Mengen ist die Trocknung in einem Sprühturm bevorzugt. Dabei wird die Suspension mit einer Düse zerstäubt und entweder im Gleichstrom mit einem Heißgasstrom gemischt oder im Gegenstrom einem Heißgasstrom entgegengeführt. Es können Einstoff- und Zweistoffdüsen verwendet werden, letztere führen bei Verwendung eines entsprechenden Luftstromes zu einem gleichmäßigeren Stofffluß. Am Boden des Sprühturms angelangt, besitzt das erfindungsgemäße synthetische Schichtsilikat schon die endgültige Korngrößenverteilung, d.h. der Anteil der Teilchen < 53 $\mu$m beträgt ca. 20 %, der Anteil der Teilchen < 100 $\mu$m beträgt ca. 60 %,der Anteil der Teilchen < 200 $\mu$m beträgt ca. 80 % und ,der Anteil der Teilchen > 200 $\mu$m beträgt ca. 20 %, so daß das vorgenannte Schichtsilikat in der Regel nicht zusätzlich durch Mahlen zerkleinert werden muß.

Um ein besonders gut lösliches Produkt nach dem erfindungsgemäßen Verfahren zu erhalten, sollte der Glühverlust ca. 15 % betragen. Wird dieser Wert wesentlich unterschritten, so geht die Auflösegeschwindigkeit zurück.

Das nach dem erfindungsgemäße Verfahren hergestellte synthetische Schichtsilikat des Hektorit-Typs mit einer Zusammensetzung entsprechend einem Li/Si-Verhältnis von 0,0246 bis 0,0985 kristallisiert in erheblich größeren Partikeln als andere synthetische Schichtsilikate des Hektorit-Typs. So beträgt der mittlere Durchmesser ($d_{50}$) der Teilchen des erfindungsgemäßen Schichtsilikats in Beispiel 1 etwa 155 nm (in 2 %iger wäßriger Dispersion), ist also bedeutend größer als der mittlere Durchmesser der Teilchen eines kommerziell erhältlichen synthetischen Magnesiumsilikats ($d_{50}$ ca. 70 nm). Dieser größere Durchmesser der Teilchen ist für viele Anwendungsbereiche von Vorteil.

Anwendungsbereiche für das nach dem erfindungsgemäße Verfahren hergestellte synthetische Schichtsilikat des Hektorit-Typs sind beispielsweise

in der Getränkeindustrie zur Klärung und Reinigung von Wein, Most, Fruchtsaft, Zuckersaft und Zuckersirup, Katalysator und Katalysatorträger,
Additiv für Pflanzenschutzmittel (Fungizide, Herbizide),
Adsorptionsmittel in der Wasser- und Abwasserreinigung,
Pflege- und Poliermittel,
Dispergator, Builder, Wäscheweichmacher in Wasch-, Reinigungs- und Pflegemitteln,
Trägersubstanz für Bestandteile von Wasch-, Reinigungs- und Pflegemitteln, Grundlagenstoff für Salben und Kosmetika,
Rheologie-Additiv (Verdickungs-, Thixotropierungs-, Stabilisierungs- und Antiabsetzmittel) für Farben, Lacke, Anstrichmittel (auch auf Wasser-Basis), Fugenfüllmassen (Joint-Compounds),
Fliesenkleber (etwa auf Dispersions-Basis), Kitte, Wachse und Klebstoffe,
Additiv bei keramischen Herstellprozessen und für Glasuren,
Additiv für Bohrspülflüssigkeiten,
Additiv für Formsandbinder für Gießereizwecke.

Das erfindungsmäßige synthetische Magnesiumsilikat mit schichtförmiger Kristallstruktur zeigt die folgenden günstigen Eigenschaften:

es es erzeugt in wäßrigen Lösungen mit geringem Elektrolytgehalt eine sehr gute Strukturviskosität,
es es erzeugt in wäßrigen Lösungen mit hohem Elektrolytgehalt eine sehr gute Strukturviskosität, und
es zeigt eine hohe Affinität zu Textilfasern

Die nach dem erfindungsgemäßen synthetische Schichtsilikate des Hektorit-Typs wurden auch auf ihre rheologischen Eigenschaften hin geprüft.

Es ist bekannt, daß Tonmineralien wäßrige Lösungen mit strukturviskosem Rheologieverhalten ergeben (K. Jasmung et al., Tonminerale und Tone, Steinkopf-Verlag 1993). Charakteristisch ist das Auftreten einer Fließgrenze. Diese tritt bei plastischem Fließverhalten auf, d.h. erst oberhalb einer Mindestschubspannung beginnt der Stoff zu fließen. Die beobachtete Viskosität nimmt oft über mehrere Größenordnungen ab (Scherverflüssigung). Unterhalb der Fließgrenze verhält sich die plastische Substanz wie ein Feststoff. Das Auftreten der vorgenannten Fließgrenze ist stark von der Art und der Konzentration der in der Lödung vorhandenen Elektrolyte abhängig. Üblicherweise ergibt die Fließgrenze in elektrolytfreien oder elektrolytarmen Lösungen nur geringe Schubspannungswerte. Mit steigender Elektrolytkonzentration zeigt auch die Fließgrenze höhere Werte. Erst bei deutlich höheren Elektrolytkonzentrationen wird ein Optimum überschritten und die Fließgrenze nimmt wieder ab.

Die Eigenschaft der Fließgrenze wird zur Einstellung der Rheologie von Dispersionen, Emulsionen etc. eingesetzt. Deren Verhalten kann günstig beeinflußt werden.

In speziellen Anwendungen wie beispielsweise Kosmetik, Lacken und Dispersionsfarben ist grundsätzlich ein geringer Elektrolytgehalt gefordert. In der Bauchemie beispielsweise dagegen ist eine möglichst hohe Elektrolyttoleranz gefordert, d.h. daß das Silikat die rheologischen Eigenschaften noch bei besonders hoher Salzfracht zeigen.

Entsprechend gereinigte Silikate entstammend einer Reaktionsmischung mit dem Verhältnis Mg/Si von 0,6849 bis 0,6750 und einem Verhältnis von Li/Si von 0,05420 bis 0,06405 zeigen in elektrolytarmer wäßriger Lösung besondere rheologische Eigenschaften, vor allem höhere Fließgrenzen als die bekannten synthetischen und natürlichen Hectorite, Montmorillonite oder Bentonite.

Erfindungsgemäße synthetische Magnesiumsilikate entstammend einer Reaktionsmischung mit dem Verhältnis Mg/Si von 0,6627 bis 0,6528 und einem Verhältnis von Li/Si von 0,0764 bis 0,0862 zeigen bei besonders hohen Elektrolytgehalten in wäßriger Lösung noch brauchbare Fließgrenzenwerte. Die Elektrolyttolerant ist höher als bei vergleichbaren reinen synthetischen Hectoriten und reinen, natürlichen Montmorilloniten.

Zur Bestimmung der rheologischen Eigenschaften werden 1,8 g Probensubstanz mit Hilfe eines Dispergators (Ultra Turrax) in 80 g entionisiertem Wasser dispergiert und 24 Stunden stehen gelassen. Die Probe wird mit einer Platte/Platte-Meßanord- nung mit einem schubspannungsgesteuertem Rheometer (Carri-med 50-Viskosimeter) vermessen. Dazu wird die Probe zunächst bei einer linear von $250 \, s^{-1}$ auf $750 \, s^{-1}$ gesteigerten Schergeschwindigkeit vorgeschert, gefolgt von einer Ruhepause von vier Minuten.

Die Fließgrenze ergibt sich experimentell bei Aufnahme eines Schubspannung-Schergeschwindigkeits-Diagramms in dem Moment, in dem bei Steigerung der Schubspannung die erste Drehbewegung (Schergeschwindigkeit) einsetzt.

Überraschend wurde auch gefunden, daß die erfindungsgemäßen synthetischen Schichtsilikate eine deutlich höhere Affinität zu Textilien besitzen als die üblicherweise für Waschanwendungen eingesetzten natürlichen Schichtsilikate. Bei Verwendung einer Lösung ähnlich einer Waschlauge haften die Silikate nicht nur entsprechend ihrer Konzentration auf den Textilien, sondern ziehen in überproportionalem Ausmaß aus der Lösung auf die Faser auf.

Die Silikate können auch als Träger für andere im Waschprozeß verwendete Substanzen, die selber nicht faseraffin sind, wie Bleichmittel, Enzyme und andere, dienen. Diese können adsorptiv auf die Oberfläche der Silikate aufgebracht, im Sinne eines Ionenaustausches, oder als polare Substanzen in die Silikate eingelagert werden. Auch durch direkte kovalente Bindungsbildung können Substanze an die Silikate gebunden werden.

Als Belegungsausbeute [%] wird der Anteil auf dem Gewebe verbliebenes Silikat relativ zu der eingesetzten Silikatmenge (100 %) bezeichnet. In der Regel werden Zweifachbestimmungen durchgeführt und der Mittelwert bestimmt.

Zur Bestimmung der Faseraffinität wird ein Textilstück (22,5g Baumwoll-Frottee) in einem rotierenden und in einem beheizbaren Wasserbad temperierten Glas-Rundkolben mit 200 ml entionisiertem Wasser (Leitfähigkeit ca. 0,01 mS) versetzt, in dem 75 mg synthetisches Silikat gelöst wurde. Mit Natronlauge wird der pH-Wert auf 10,4 und mit wäßriger NaCl-Lösung die Leitfähigkeit auf 1,2 mS eingestellt.

Der Vorwaschgang wird durch 5-minütige Behandlung bei ca. 20 °C simuliert, danach der Hauptwaschgang bei 60 °C (15 Minuten Behandlung). Danach werden die Lösung und das Textilstück mit 20 ml Leitungswasser (20 °C, 5 Minuten) versetzt und abgekühlt. Die Spülgänge werden durch viermaliges Waschen mit jeweils 85 ml Wasser simuliert. Danach wird für 15 Stunden im Trockenschrank bei 80 °C getrocknet. Die Belegung wird durch Elementaranalyse (Mg-Gehalt gegenüber Blindwert) des getrockneten Textilstücks bestimmt.

Beispiel 1

Zunächst werden drei Lösungen hergestellt.

Lösung 1:   In einem Becherglas werden 320 g $H_2O$ vorgelegt und darin 351g $MgSO_4 \cdot 7H_2O$ gelöst.

Lösung 2:   In 315 g Wasser werden 31,4 g NaOH (50 Gew.-%) und 5,00 g $Li_2CO_3$ suspendiert und unter Kühlung und Rühren 47 g Flußsäure (40 % HF) dazugetropft. Durch die $CO_2$-Entwicklung erfolgt starkes Schäumen.

Lösung 3:   In 480 g Wasser werden 46 g NaOH (100 Gew.-%), 39 g $Na_2CO_3$ und 446,7 g Wasserglas (8,3 Gew.-% $Na_2O$, 27,8 Gew.-% $SiO_2$, Typ: 4/1, Hersteller: Societe Francaise Hoechst) gelöst.

In die vorgelegte Lösung 1 wird bei Raumtemperatur unter intensivem Rühren mit einem Flügelrührer die Lösung 2 gegeben, und anschließend unter weiterem intensiven Rühren langsam die Lösung 3 hinzugefügt. Anschließend rührt man noch 5 Stunden bei 200 °C.

Die danach abgekühlte Suspension mit pH=9,2 wird anschließend durch mehrfaches Zentrifugieren, Dekantieren der überstehenden Salzlösung und Wiederaufschlämmen der schwereren Phase mit insgesamt 8 l entmineralisiertem Wasser gewaschen, bis die Leitfähigkeit der Suspension unter 2,8 mS liegt.

Nach dem Trocknen bei 80 °C im Trockenschrank und Mahlen in einer Schlagkreuzmühle, wurden 189 g Produkt erhalten. Die Analyse ergibt 0,44 Gew.-% Li, 15,4 Gew.-% Mg, 27 Gew.-% Si, 5,1 Gew.-% F. $d_{50}$ der Primärteilchen in 2 %iger wäßriger Lösung beträgt 133 nm. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

Beispiel 2

Es wird vorgegangen wie in Beispiel 1, jedoch mit folgenden Lösungen:

Lösung 1: In einem 250-Liter-Rührkessel werden 48 kg $H_2O$ vorgelegt und darin bei 40 °C unter Rühren 53 kg $MgSO_4 \cdot 7\ H_2O$ gelöst.

Lösung 2: In einem getrennten 60-Liter-Rührbehälter werden 82,6 kg Wasser vorgelegt und darin 4,71 kg NaOH (50 Gew.-%) und 0,69 kg $Li_2CO_3$ suspendiert und unter Kühlung und Rühren 7,05 kg Flußsäure (40 % HF) so zudosiert, daß die $CO_2$-Entwicklung kontrolliert abgeführt werden kann. Durch die Neutralisationswärme steigt die Temperatur im Verlauf des Zudosierens auf etwa 65 °C an.

Lösung 3: In einem 250-Liter-Rührkessel werden 72 kg Wasser vorgelegt und 6,9 kg NaOH (100 Gew.-%), 5,85 kg $Na_2CO_3$ und 67,5 kg Wasserglas (8,3 Gew.-% $Na_2O$, 27,8 Gew.-% $SiO_2$, Typ: 4/1, Hersteller: Societe Francaise Hoechst) nacheinander gelöst.

Die Lösung 2 wird innerhalb einer Stunde unter Rühren und unter Beibehaltung der oben genannten Temperatur zur Lösung 1 gepumpt und die entstandene Mischung anschließend in einem 250-Liter-Hochdruckbehälter abgelassen. Die Lösung 3 wird innerhalb 1 h unter starkem Rühren zur Mischung zudosiert und anschließend wird innerhalb von 1,5 bis 2 h auf 208 °C (Innendruck ca. 17,5 bar) aufgeheizt und 5 h gerührt. Danach wird auf eine Temperatur unterhalb 100 °C abgekühlt und die Hälfte der entstandenen Suspension (insgesamt 300 kg) in einen Zwischenbehälter zu 150 kg vorgelegtem $H_2O$ (Leitfähigkeit der entstehenden Suspension: 71,5 mS, pH = 9,5) gepumpt und in einer im Kreislauf geführten Filtrationsapparatur mit insgesamt 1810 kg demineralisiertem Wasser gewaschen.

Die so gereinigte Suspension (Feststoffgehalt 5,9 %, pH-Wert: 9,8 Leitfähigkeit: 0,95 mS) wird in einem Trockenschrank bei 80 °C getrocknet. Man erhält 10,9 kg getrocknetes Produkt, das auf einer Hammermühle vorgebrochen und mit einer Stiftmühle gemahlen wird.

Die Analyse des Produkts ergibt 0,39 Gew.-% Li, 16,3 Gew.-% Mg, 26,2 Gew.-% Si, 5,5 Gew.-% F. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

Beispiel 3

Es wurde vorgegangen wie in Beispiel 1.

Lösung 1: 379 g $H_2O$, darin 226g $MgSO_4 \cdot 7\ H_2O$ gelöst,

Lösung 2: 284 g Wasser, darin 6,34 g $Li_2CO_3$ und 29,14 g $MgF_2$ suspendiert,

Lösung 3: 480 g Wasser, 46 g NaOH (100 Gew.-%), 39 g $Na_2CO_3$ und 449,9 g Wasserglas (8,3 Gew.-% $Na_2O$, 28,18 Gew.-% $SiO_2$, Typ: 4/1, Hersteller: Societe Francaise Hoechst).

Die Lösungen werden wie in Beispiel 1 vereinigt und dann das Gemisch aller Komponenten bei 200 °C 5 h langsam gerührt.

Die abgekühlte Suspension mit pH=10,0 wird anschließend durch mehrfaches Zentrifugieren, Dekantieren der überstehenden Salzlösung und Wiederaufschlämmen der schwereren Phase mit insgesamt 8 l entmineralisiertem Wasser gewaschen, bis die Leitfähigkeit der Suspension unter 3,6 mS liegt.

Nach dem Trocknen bei 80 °C im Trockenschrank und Mahlen in einer Schlagkreuzmühle, wurden 183 g Produkt erhalten. Die Analyse ergibt 0,48 Gew.-% Li, 14,5 Gew.-% Mg, 24,2 Gew.-% Si, 5,6 Gew.-% F, Glühverlust 15,2 %, $d_{50}$ der Primärteilchen in 2 %iger wäßriger Lösung beträgt 16 nm. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

| Fließgrenze (Pa) | Leitfähigkeit (mS) |
|---|---|
| 0,05 | 0,99 |
| 5,02 | 1,68 |
| 36,68 | 3,05 |

Beispiel 4

Es wurde vorgegangen wie in Beispiel 1.

Lösung 1:  379 g $H_2O$, darin 226g $MgSO_4 \cdot 7 H_2O$ gelöst,
Lösung 2:  284 g Wasser, darin 6,34 g $Li_2CO_3$ und 29,14 g $Mg(OH)_2$ suspendiert, dann 47 g Flußsäure (40 % HF),
Lösung 3:  480 g Wasser, 46 g NaOH (100 Gew.-%), 39 g $Na_2CO_3$ und 437 g Wasserglas (8,3 Gew.-% $Na_2O$, 28,18 Gew.-% $SiO_2$, Typ: 4/1, Hersteller: Societe Francaise Hoechst).

Die Lösungen werden wie in Beispiel 1 vereinigt und dann das Gemisch aller Komponenten bei 200 °C 5 h langsam gerührt.
Die abgekühlte Suspension mit pH=9,0 wird anschließend durch mehrfaches Zentrifügieren, Dekantieren der überstehenden Salzlösung und Wiederaufschlämmen der schwereren Phase mit insgesamt 8 l entmineralisiertem Wasser gewaschen, bis die Leitfähigkeit der Suspension unter 1,3 mS liegt.
Nach dem Trocknen bei 80 °C im Trockenschrank und Mahlen in einer Schlagkreuzmühle, wurden 189 g Produkt erhalten. Die Analyse ergibt 0,51 Gew.-% Li, 15,4 Gew.-% Mg, 25,5 Gew.-% Si, 8,4 Gew.-% F, $d_{50}$ der Primärteilchen in 2 %iger wäßriger Lösung beträgt 245 nm. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

| Fließgrenze (Pa) | Leitfähigkeit (mS) |
|---|---|
| 1,01 | 0,67 |
| 41,41 | 1,61 |
| 42,21 | 3,04 |

Beispiel 5

Es wurde vorgegangen wie in Beispiel 1.

Lösung 1:  320 g $H_2O$, darin 226g $MgSO_4 \cdot 7 H_2O$ gelöst,
Lösung 2:  284 g Wasser, darin 6,34 g $Li_2O_3$ und 46,36 g $Mg(OH)_2$ x $4MgCO_3$ 4 $H_2O$ suspendiert, dann 47 g Flußsäure (40 % HF),
Lösung 3:  480 g Wasser, 46 g NaOH (100 Gew.-%), 39 g $Na_2CO_3$ und 449 g Wasserglas (8,3 Gew.-% $Na_2O$, 28,18 Gew.-% $SiO_2$, Typ: 4/1, Hersteller: Societe Francaise Hoechst).

Die Lösungen werden wie in Beispiel 1 vereinigt und dann das Gemisch aller Komponenten bei 200 °C 5 h langsam gerührt.
Die abgekühlte Suspension mit einer Leitfähigkeit von 76,2 mS wird anschließend durch mehrfaches Zentrifugieren, Dekantieren der überstehenden Salzlösung und Wiederaufschlämmen der schwereren Phase mit insgesamt 8 l entmineralisiertem Wasser gewaschen, bis die Leitfähigkeit der Suspension unter 1,61 mS liegt.
Nach dem Trocknen bei 80 °C im Trockenschrank und Mahlen in einer Schlagkreuzmühle, wurden 190 g Produkt erhalten. Die Analyse ergibt 0,54 Gew.-% Li, 15,5 Gew.-% Mg, 26 Gew.-% Si, 5,5 Gew.-% F, $d_{50}$ der Primärteilchen in 2 %iger wäßriger Lösung beträgt 151 nm. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

| Fließgrenze (Pa) | Leitfähigkeit (mS) |
|---|---|
| 16,08 | 0,99 |
| 26,13 | 1,83 |
| 20,85 | 3,19 |

(fortgesetzt)

| Fließgrenze (Pa) | Leitfähigkeit (mS) |
|---|---|
| 14,5 | 5,44 |

Beispiel 6

Es werden 191,0 g Festwasserglas der Zusammensetzung 33,4 Gew.-% $Na_2O$ und 66,38 Gew.-% $SiO_2$ (Fa. Societe Francaise Hoechst) in einem Rührbehälter vorgelegt, 480 g Wasser, 12,62 g NaOH (100 %) und 39 g $Na_2CO_3$ zugegeben und 1 h gerührt. Nacheinander werden hieb die Lösungen 1 und 2 zudosiert und das Gemisch aller Komponenten bei 195 °C 5 h langsam gerührt.

Lösung 1: 320 g $H_2O$, darin 353,6 g $MgSO_4 \cdot 7 H_2O$ gelöst,
Lösung 2: 284 g Wasser, darin 62,88 g NaOH (50 %), 4,61 g $Li_2CO_3$ und dann 47 g Flußsäure (40 % HF).

Die abgekühlte Suspension mit einer Leitfähigkeit von 72 mS und einem pH=8,5 wird anschließend durch mehrfaches Zentrifugieren, Dekantieren der überstehenden Salzlösung und Wiederaufschlämmen der schwereren Phase mit insgesamt 8 l entmineralisiertem Wasser gewaschen, bis die Leitfähigkeit der Suspension unter 1,58 mS liegt.

Nach dem Trocknen bei 80 °C im Trockenschrank und Mahlen in einer Schlagkreuzmühle, wurden 179 g Produkt erhalten. Die Analyse ergibt 0,53 Gew.-% Li, 15,1 Gew.-% Mg, 24,2 Gew.-% Si, 6,4 Gew.-% F, $d_{50}$ der Primärteilchen in 2 %iger wäßriger Lösung beträgt 300 nm. Die Aufnahme eines Röntgendiffraktogrammes bestätigt das Vorliegen eines Silikates mit Hectoritstruktur. Die rheologischen Daten wurden mit einem Carri-med-50-Viscosimeter aufgenommen.

| Fließgrenze (Pa) | Leitfähigkeit (mS) |
|---|---|
| 15,28 | 1,11 |
| 17,29 | 1,9 |
| 13,07 | 3,2 |
| 5,03 | 5,41 |

Beispiele 7 bis 11 und Beispiel 12

Für die Beispiele 7 bis 11 wurden die in der Tabelle 1 angegebenen Eduktmengen eingesetzt, und die Endprodukte nach den in den Beispielen 1 bis 6 angegebenen Verfahren kristallisiert und ggf. gereinigt. Erhalten wurden in jedem Fall synthetische Schichtsilikate, die die in der Tabelle 1 wiedergegebenen charakteristischen Daten aufweisen.

Entsprechend der vorangegangenen Beschreibungsweise wurden an den erfindungsgemäßen Beispielen 1, 2, 7, 8 und 9 und den Vergleichsbeispielen 10 bis 12 (das in Beispiel 12 eingesetzte Schichtsilikat ist ein kommerziell erhältlicher synthetischer Hectorit) die jeweiligen Fließgrenzen in Abhängigkeit von der Leitfähigkeit der Suspension, d. h. in Abhängigkeit vom Elektrolytgehalt, bestimmt.

Die synthetischen Magnesiumsilikate gemäß der vorliegenden Erfindung (Beispiele 1, 2, 7 und 8) zeigen bereits bei niedrigen Elektrolytgehalten eine hohe Fließgrenze, d.h. eine hohe Strukturviskosität.

Das synthetische Magnesiumsilikat gemäß der vorliegenden Erfindung (Beispiel 8) zeigt bei sehr hohen Elektrolytgehalten eine hohe Fließgrenze.

Tabelle 1: Rheologie

| | Einwaage | | | | | | | Kristallisation | | Rheologie (2 % in destilliertem Wasser) | |
|---|---|---|---|---|---|---|---|---|---|---|---|
| | $H_2O$ [kg] | $MgSO_4 \cdot 7H_2O$ [kg] | NaOH [kg] | $Li_2CO_3$ [g] | HF (40 %ig) [kg] | $Na_2CO_3$ [kg] | Na 4/1 [kg] | Temperatur [°C] | Zeit [h] | Fließgrenze [Pa] | Leitfähigkeit [mS] |
| Beispiel 1 (erfindungsgemäß) | 1,1154 | 0,3511 | 0,0774 | 5 | 0,047 | 0,039 | 0,4466 | 200 | 5 | 29,55<br>44,72<br>38,69<br>5,025 | 0,63<br>1,59<br>3,04<br>6 |
| Beispiel 2 (erfindungsgemäß) | 162,6 | 53,04 | 11,61 | 690 | 7,05 | 5,85 | 67,5 | 208 | 5 | 25,33<br>38,89<br>44,02 | 0,49<br>0,95<br>1,31 |
| Beispiel 7 (erfindungsgemäß) | 162,6 | 53,4 | 11,61 | 633 | 7,05 | 5,85 | 67,5 | 208 | 5 | 45,53 | 0,87 |
| Beispiel 8 (erfindungsgemäß) | 1,1154 | 0,3536 | 0,0774 | 4,6 | 0,047 | 0,039 | 0,4466 | 200 | 5 | 46,73 | 0,77 |
| Beispiel 9 (erfindungsgemäß) | 1,1154 | 0,34082 | 0,08 | 6,54 | 0,047 | 0,039 | 0,4466 | 200 | 5 | 1<br>20,45<br>47,45<br>40,1<br>6,553 | 0,52<br>1,48<br>3<br>5,57<br>9,22 |
| Beispiel 10 (Vergleich) | 1,1154 | 0,3608 | 0,0774 | 3,4 | 0,047 | 0,039 | 0,4467 | 200 | 5 | 35,88 | 1,37 |
| Beispiel 11 (Vergleich) | 162,6 | 51,3 | 11,61 | 990 | 7,05 | 5,85 | 68,4 | 206 | 5 | 0,1005 | 0,96 |
| Beispiel 12 (kommerziell erhältlicher, synthetischer Hectorit) | | | | | | | | | | 0,201<br>0,5<br>0,402<br>12,96<br>39,7<br>47,3<br>43,25<br>9,535<br>2,322<br>1,98 | 0,043<br>0,5<br>0,66<br>0,86<br>1,1<br>1,4<br>2,9<br>5,3<br>7,7<br>10,1 |

Für die erfindungsgemäßen synthetischen Magnesiumsilikate der Beispiele 1, 2 und 7 bis 9 wurden auch die Faseraffinitäten mit natürlichen Bentoniten (I bis III) und dem Produkt von Beispiel 11 vergleichen.

Tabelle 2

| Faseraffinitäten | |
|---|---|
| | Faseraffinität |
| Beispiel 1 | 82,9 |
| Beispiel 2 | 82,3 |
| Beispiel 7 | 81,3 |
| Beispiel 8 | 95,6 |
| Beispiel 9 (alle erfindungsgemäß) | 97,9 |
| Beispiel 11 (Vergleich) | 80,8 |
| nat. Bentonit I | 70,1 |
| nat. Bentonit II | 69,5 |
| nat. Bentonit III | 61,8 |

Die erfindungsgemäßen synthetischen Magnesiumsilikate der Beispiele 1, 2 und 7 bis 9 zeigen deutlich höhere Faseraffinitäten als das Magnesiumsilikat aus Beispiel 11 und vor allem gegenüber den natürlichen Bentoniten.

**Patentansprüche**

1. Synthetisches Magnesiumsilikat mit schichtförmiger Kristallstruktur der allgemeinen Formel

$$[Mg_{3-x}Li_xSi_4O_{10}(OH)_{2-y}F_y]^{x-} \, ^x/_z M^{z+}$$

mit $0,1 \leq x \leq 0,4$ und $0 \leq y \leq 2$, M ist ein Alkalimetallion mit der Wertigkeit z und in dem der Fluorgehalt $[c_F]$ zum Siliciumgehalt $[c_{Si}]$ im Verhältnis

$$c_F[mol] = -1,92 \, c_{Si}[mol] + b \text{ mit } b = 2,18 \text{ bis } 2,02$$

steht.

2. Synthetisches Magnesiumsilikat mit schichtförmiger Kristallstruktur nach Anspruch 1, dadurch gekennzeichnet, daß $0,21 \leq x \leq 0,33$ ist

3. Synthetisches Magnesiumsilikat mit schichtförmiger Kristallstruktur nach Anspruch 1, dadurch gekennzeichnet, daß $0,21 \leq x \leq 0,28$ ist

4. Synthetisches Magnesiumsilikat mit schichtförmiger Kristallstruktur nach einem oder mehreren der Ansprüche 1 bis 3, dadurch gekennzeichnet, daß es in wäßrigen Lösungen mit geringem Elektrolytgehalt eine hohe Strukturviskosität erzeugt.

5. Synthetisches Magnesiumsilikat mit schichtförmiger Kristallstruktur nach einem oder mehreren der Ansprüche 1 bis 3, dadurch gekennzeichnet, daß es in wäßrigen Lösungen mit hohem Elektrolytgehalt eine hohe Strukturviskosität erzeugt.

6. Synthetisches Magnesiumsilikat mit schichtförmiger Kristallstruktur nach einem oder mehreren der Ansprüche 1 bis 3, dadurch gekennzeichnet, daß es eine hohe Affinität zu Textilfasern zeigt.

7. Verfahren zur Herstellung von synthetischen Magnesiumsilikaten mit schichtförmiger Kristallstruktur, dadurch gekennzeichnet, daß man eine wäßrige $Mg_2SO_4$-Lösung mit einer wäßrigen Lösung, die Lithium- und Fluorid-Ionen enthalt, umsetzt, und anschließend eine Silicium-Verbindung hinzufügt.

8. Verfahren nach Anspruch 5, dadurch gekennzeichnet, daß man nach Zugabe der Silicium-Verbindung die Reaktionsmischung erhitzt und für 2 bis 24 Stunden auf dieser Temperatur hält, danach abkühlt und das Magnesiumsilikat von den Nebenprodukten abtrennt, anschließend wäscht und aufarbeitet.

9. Verfahren nach Anspruch 6, dadurch gekennzeichnet, daß man auf 100 bis 320 °C erhitzt.

10. Verfahren nach Anspruch 8 oder 9, dadurch gekennzeichnet, daß man für 3 bis 8 Stunden auf 170 bis 220 °C erhitzt.

11. Verfahren nach mindestens einem der Ansprüche 7 bis 10, dadurch gekennzeichnet, daß in der Reaktionsmischung die Molverhältnisse

Mg/Si = 0,7144 bis 0,6405
Li/Si = 0,02464 bis 0,09854
F/Si = 0,4009 bis 0,4899
Na/Si = 0,9514 bis 2,0298
$H_2O$/Si = 13,9947 bis 42,7536

vorliegen

12. Verfahren nach mindestens einem der Ansprüche 7 bis 11, dadurch gekennzeichnet, daß das Molverhältnis

Mg/Si = 0,6873 bis 0,6578
Li/Si = 0,05173 bis 0,0813

beträgt.

13. Verfahren nach mindestens einem der Ansprüche 7 bis 12, dadurch gekennzeichnet, daß das Molverhältnis

Mg/Si = 0,6873 bis 0,6701
Li/Si = 0,05173 bis 0,0898

beträgt.

14. Verfahren nach mindestens einem der Ansprüche 7 bis 13, dadurch gekennzeichnet, daß man das Magnesiumsilikat anschließend aufmahlt.

15. Verwendung von synthetischen Schichtsilikaten des Hectorit-Typs nach einem der Ansprüche 1 bis 6 oder erhalten nach dem Verfahren der Ansprüche 7 bis 14, zur Herstellung von oder zur Verwendung als Rheologie-Additiv, zur Klärung und Reinigung von Getränken, als Katalysator oder Katalysatorträger, Adsorptionsmittel, Bindemittel und/oder Füllstoff, (Lösungs-)Additiv für Pflanzenschutzformulierungen, Dispergator, Builder, Wäscheweichmacher, Trägersubstanz für andere Stoffe und als Additiv.

# EP 0 889 003 A1

**Europäisches Patentamt**

## EUROPÄISCHER RECHERCHENBERICHT

**Nummer der Anmeldung**

EP 98 11 1802

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 586 478 A (NEUMANN BARBARA SUSAN) 22. Juni 1971 * Ansprüche 1,4 * * Spalte 3, Zeile 26 – Spalte 3, Zeile 38 * * Spalte 4, Zeile 60 – Spalte 5, Zeile 2 * * Beispiel 3 * | 7 | C01B33/40 C11D3/12 B01J21/16 B01J23/00 B01J20/12 C09D7/12 |
| A D | & GB 1 054 111 A (LAPORTE INDUSTRIES LTD) --- | 1-3 | |
| D,X | US 4 049 780 A (NEUMANN BARBARA SUSAN) 20. September 1977 * Ansprüche 1,3 * * Spalte 4, Zeile 37 – Spalte 5, Zeile 13 * * Beispiele 1,2 * | 7 | |
| A | --- | 1-3 | |
| A | EP 0 537 064 A (INST FRANCAIS DU PETROL) 14. April 1993 * Ansprüche 1-10 * * Seite 6, Zeile 51 – Seite 7, Zeile 2 * * Beispiele 1,2,5 * ---. | 1-3,15 | **RECHERCHIERTE SACHGEBIETE (Int.Cl.6)** C01B |
| D,A | EP 0 088 372 A (HOECHST AG) 14. September 1983 * Ansprüche 1,2 * * Beispiele 1,2 * --- | 1-3,15 | |
| A | FR 2 349 541 A (NL INDUSTRIES INC) 25. November 1977 * Anspruch 1 * * Seite 14, Zeile 8 – Zeile 24 * | 1-3,7,15 | |
| D | & DE 27 18 576 A --- | | |
| A | WO 92 21612 A (HENKEL KGAA) 10. Dezember 1992 * das ganze Dokument * --- | 1-3,15 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 22. Oktober 1998 | Rigondaud, B |

# EP 0 889 003 A1

<table>
<tr><td colspan="2">Europäisches Patentamt</td><td>EUROPÄISCHER RECHERCHENBERICHT</td><td>Nummer der Anmeldung<br>EP 98 11 1802</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DD 279 234 A (UNIV HALLE WITTENBERG) 30. Mai 1990 * Seite 2, Zeile 24 – Zeile 27 * ----- | 7 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 22. Oktober 1998 | Rigondaud, B |